# EUROPÄISCHE PATENTANMELDUNG

(11) **EP 1 428 800 A1**
(43) Veröffentlichungstag der Anmeldung: **16.06.2004**
(21) Anmeldenummer: 03027589.5
(22) Anmeldetag: 02.12.2003
(51) Int. Cl.: C02F 3/12, G01F 23/14

(54) **Verfahren und Vorrichtung zu Überwachung und Steuerung eines Abwasserreinigungsprozesses**

(30) Priorität: 12.12.2002 DE 10258349; 03.06.2003 DE 10325261
(71) Anmelder: Boller, Reinhard, 57234 Wilnsdorf (DE); Decker, Peter, 57250 Netphen (DE)
(72) Erfinder: Boller, Reinhard, 57234 Wilnsdorf (DE); Decker, Peter, 57250 Netphen (DE)
(74) Vertreter: Valentin, Ekkehard

(57) **Zusammenfassung**

Die Erfindung betrifft ein Verfahren zur Überwachung und Steuerung von Reinigungsprozessen in Abwasserbehandlungsanlagen, insbesondere in Kleinkläranlagen bzw. kleinen Kläranlagen, die nach dem SBR-Verfahren bzw. Aufstauverfahren betreibbar, sind mittels Höhenstandsmessungen in einander folgenden Behandlungsstufen beispielsweise für mechanische Vorklärung / Puffer bzw. Speicher, sowie biologische Reinigung einschließlich Nachklärung. Hierzu wird in wenigstens einer Behandlungsstufe eine Höhenstandsmessung des Abwassers unter Verwendung wenigstens eines Drucksensors (19-22) mittels Druckluft durchgeführt. Die erhaltenen Messwerte werden einer zentralen Steuereinheit (7) aufgeschaltet, die diese Messwerte auswertet und ggf. mit einem in der Steuereinheit (7) hinterlegten Steuerprogramm vergleicht und ggf. Steuerbefehle an eine Behandlungsstufe auslöst bzw. Informationen über eine Behandlungsstufe abgibt. Die Erfindung betrifft auch eine entsprechende Vorrichtung zur Durchführung des Verfahrens.

## Beschreibung

Die Erfindung betrifft ein Verfahren und eine Vorrichtung zur Überwachung und Steuerung von Abwasserreinigungsprozessen in Abwasserbehandlungsanlagen, insbesondere in Kleinkläranlagen und kleinen nach dem SBR-Verfahren bzw. Aufstauverfahren betreibbaren Kläranlagen mittels Höhenstandsmessungen in einander folgenden Behandlungsstufen.

Der Begriff SBR-Verfahren steht für Sequencing Batch Reactor und wird auch als Aufstauverfahren bezeichnet. Diese Begriffe schließen auch verwandte Verfahren mit zusätzlichen Aufwuchsflächen für Mikroorganismen ein.

Kleinkläranlagen oder kleine Kläranlagen dienen der vollbiologischen dezentralen Abwasserreinigung insbesondere in ländlich strukturierten Gebieten, in denen kein Kanalanschluß vorhanden ist oder hergestellt werden kann. In diesen Gebieten wird entsprechend gesetzlichen Bestimmungen eine erforderliche Abwasserreinigung für Kleinkläranlagen realisiert. Bei Kleinkläranlagen handelt es sich um Abwasserbehandlungsanlagen bis zu einem Anschlusswert von 53 Einwohnern bzw. bis zu einem täglichen Schmutzwasseranfall von bis zu 8 m³.

Diese Abwasseranlagen sind entsprechend dem Stand der Technik zur Steuerung von ihren Antrieben, z.B. Pumpen, Ventilen, Gebläsen, mit Steuerungselementen ausgestattet, die überwiegend die erforderlichen Informationen z.B. von aktuellen Wasserständen mit Hilfe von Schwimmerschaltern erhalten.

Aus dem Dokument DE 100 48 309 C2 ist eine Kleinkläranlage zur biologischen Abwasserreinigung nach dem SBR-Verfahren beschrieben. Diese Kleinkläranlage umfaßt eine Vorklärkammer, eine biologische Reinigungskammer sowie Einrichtungen zur Einleitung von Abwasser in die Vorklärkammer, zur Überleitung des Abwassers von der Vorklärkammer in die Reinigungskammer und ferner Einrichtungen zur Ableitung des Abwassers aus der Reinigungskammer sowie zur Rückführung von Sedimentationsgut aus der Reaktionskammer in die Vorklärkammer. Zur Ermittlung des Abwasser-Füllstandes in der Vorklärkammer ist ein Schwimmerschalter angeordnet. In Abhängigkeit von der von dem Schwimmerschalter ermittelten Abwasserhöhe ist eine von der Vorklärkammer zur Reaktionskammer geführte Menge an Abwasser und/oder Sedimentationsgut geregelt.

Aus dem Dokument DE 199 07 980 A1 ist eine Vorrichtung zum Behandeln von Abwasser in Kleinkläranlagen, insbesondere Einbecken-Kläranlagen bekannt. Um die Füllstände im Abwasserbehälter zu überwachen und gegebenenfalls durch Betätigung der Entnahmepumpe bzw. einer Abwasser-Zufuhrpumpe zu steuern wird ein Schwimmer mit einem Schwimmerschalter eingesetzt.

Den Schwimmer gesteuerten Systemen liegen jedoch die folgenden Nachteile zugrunde:

Relativ hohe Kosten für den Schwimmer mit Schalterfunktion und aufwendige Kabelanschlüsse an den Schwimmern. Ferner führen Verschmutzungen der Schwimmer zu Fehlfunktionen bei Niedrigwasser. Mit Schwimmern können absolute Wasserstände beispielsweise in Zentimetern nicht mehr erfaßt werden.
Dem Grunde nach wurden in den bisherigen Anlagen mit Schwimmersteuerung nur die Zustände "leer" und "voll" gemeldet und in der Anlagensteuerung verarbeitet.

Zur Überwachung und Steuerung von Reinigungsprozessen in Abwasseranlagen und insbesondere in nach dem SBR-Verfahren betreibbaren Kleinkläranlagen liegt jedoch die Erfahrung zugrunde, dass hier die exakte Einhaltung der Wasserstände in den Einzelnen Funktionsstufen der SBR-Anlagen notwendig ist.

Aus dieser Erkenntnis ergibt sich die Aufgabe der vorliegenden Erfindung, ein Verfahren und eine Vorrichtung zur Verfügung zu stellen, womit auf einfache und kostengünstige Weise die Abwasserreinigung in SBR-Anlagen überwacht und gesteuert werden kann, dabei Überschreitung bzw. Unterschreitung der Wasserstände im Reaktor vermieden wird und Störungen wie eine unzulässige Pegelhöhe des Abwassers im Reaktor erkannt wird.

Zur Lösung der Aufgabe sieht das Verfahren der im Oberbegriff von Anspruch 1 genannten Art mit der Erfindung vor, dass in wenigstens einer Behandlungsstufe eine Höhenstandsmessung des Abwassers unter Verwendung wenigstens eines Drucksensors mittels Druckluft durchgeführt wird und die erhaltenen Messwerte einer zentralen Steuereinheit aufgeschaltet werden, welche diese Messwerte auswertet und ggf. mit einem in der Steuereinheit hinterlegten Steuerprogramm vergleicht und ggf. einen Steuerbefehl an eine Behandlungsstufe auslöst bzw. Informationen über eine Behandlungsstufe abgibt. Mit diesen Maßnahmen wird für Kleinkläranlagen und kleine Kläranlagen, die nach dem SBR-Verfahren arbeiten, ein sicherer Anlagenbetrieb gewährleistet. Die Höhenstandsmessung erfasst dabei jeden denkbaren Messpunkt zwischen einem Höchststand und einem Niedrigstand und kann in beliebigen Zeitabständen erfolgen.

Vorrichtungsmäßig sieht die Erfindung zu diesem Zweck vor, dass in mindestens eine von einem Gebläse / Verdichter druckseitig abgehende Luftleitung bzw. abgehenden Luftleitungen mindestens ein Drucksensor eingebaut ist und dieser mit einer Steuerungseinheit für den Prozessablauf verbunden ist. Wasserstandsänderungen führen zwangsweise zu einer Änderung des gemessenen Druckes. Die Drucksensoren sind mit der Steuereinheit für den Prozessablauf verbunden. Damit sind Steuerungen von Kleinkläranlagen und kleinen Kläranlagen, insbesondere von SBR-Anlagen auf einfache und kostengünstige Weise in der Lage, das Verfahren der Abwasserreinigung zu überwachen sowie Störungen frühzeitig und umfassend zu erkennen.

Mit den erfindungsgemäßen Maßnahmen können weiterhin erstmals Steuerbefehle der Steuereinheit an die vorhandenen Wasserstände im SBR-Reaktor angepaßt werden. Beispielsweise kann der Befüllvorgang des SBR-Reaktors exakt vorgegeben werden, der Höhenstand der Vorklärung überwacht werden, der Klarwasserabzug exakt vorgegeben werden und es kann frühzeitig eine Unter- bzw. Überlastung der Anlage festgestellt werden.

In Ausgestaltung des erfindungsgemäßen Verfahrens wird vorgeschlagen, dass die Druckmessung mechanisch, elektronisch oder einer Kombination derselben oder dergleichen erfolgen kann.

Die Prozesssteuerung ist besonders effektiv, wenn das Verfahren der Höhenstandsmessung mittels Drucksensoren in jeweils unterschiedlichen Behandlungsstufen des SBR-Verfahrens realisiert wird.

Weil Temperaturänderungen sowohl in der Ansaug- wie auch der verdichteten Luft mit Änderungen des Druckzustandes einhergehen, wird in Ausgestaltung der Erfindung vorgeschlagen, mindestens eine Temperaturmessung zur Optimierung der Drucksteuerung mittels der Drucksensoren vorzusehen, so dass entsprechende Korrektur-Parameter in die Prozesssteuerung eingegeben werden können.

In Ausgestaltung der Erfindung wird vorrichtungsmäßig vorgeschlagen, dass der Abwasserbehandlungsanlage zugeordnete Speicher und/oder Pufferbehälter mit Druck- und/oder Temperatursensoren ausgerüstet sind, die mit der Steuereinheit in Verbindung stehen. Vorteilhaft können die Drucksensoren durch separate Signalleitungen mit der Steuereinheit verbunden sein.

Über die beispielsweise in der Vorklärung einer SBR-Anlage über den Drucksensor vor und nach dem Befüllvorgang gemessenen Wasserstände kann exakt über die dann vorhandene Druckdifferenz die in den SBR-Reaktor geförderte Abwassermenge in Verbindung mit der in der Steuereinheit hinterlegten Behältergeometrie errechnet werden. Die weiteren Befüllzeiten und/oder die Belüftungszeiten bzw. das Belüftungsintervall kann dabei dynamisch angepasst werden, um stets eine optimale Reinigung zu erzielen. Die Abwasserreinigung kann damit erstmals auf einfache Weise den hydraulischen Belastungsschwankungen angeglichen werden.

In gleicher Weise kann im SBR-Reaktor vor und nach dem Befüllvorgang durch Vergleich des Luftdruckes die in den SBR-Reaktor geförderte Abwassermenge ermittelt werden. Beide ermittelten Wassermengen müssen übereinstimmen. Sofern dies nicht der Fall ist, kann die Steuerung eine Störmeldung erzeugen, da beispielsweise eine verstopfte Mammutpumpe die Ursache sein kann.

Ferner kann beispielsweise auch der Klarwasserabzug überwacht werden. Auch können beispielsweise der Belüfter oder die Druckluftverbindungsleitungen oder die Leistung des Verdichters ständig überwacht werden. Auch ist eine Abschaltung des Verdichters bei zu hohem Druck möglich.

Mit der Erfindung kann beispielsweise eine Phosphatfällung im aufzubereitenden Abwasser gesteuert bzw. geregelt werden, da nun erstmals eine einfache und präzise Möglichkeit einer mengenproportionalen Dosierung von Fällmitteln in Kleinkläranlagen und kleinen Kläranlagen besteht. Dabei ist es unerheblich, ob die Information zur Ermittlung der Abwassermenge beispielsweise in der Vorklärung oder dem SBR-Reaktor vorgenommen wird.

Auch kann erfindungsgemäß eine gewünschte Stickstoffelimination vorgenommen werden, da nun erstmals eine einfache und doch präzise Möglichkeit einer an die Belastungssituation angepasste Steuerung bzw. Regelung in Kleinkläranlagen und in kleinen Kläranlagen besteht. Es ist auch hierbei unerheblich, ob die Information zur Ermittlung der Abwassermenge beispielsweise in der Vorklärung oder dem SBR-Reaktor vorgenommen wird. Die Pausen- bzw. Laufzeitintervalle können angepasst werden, um eine optimierte Nitrifikation und/oder Denitrifikation zu erzielen.

Ferner kann ein weiteres bisher bestehendes Defizit bei Kleinkläranlagen nun auf einfache Weise ausgeglichen werden. Bisher konnte die aus den Kleinkläranlagen abfließende Menge an gereinigtem Abwasser nicht ermittelt werden. Mit den erfindungsgemäßen Maßnahmen ist es nunmehr über die entsprechend programmierte Steuerung auf einfache Weise möglich, die zu- und abfließende Abwassermenge genau zu erfassen und beispielsweise anzuzeigen und/oder zu speichern und/oder über eine Schnittstelle für weitere Nutzungen zur Verfügung zu stellen.

Mit den erfindungsgemäßen Maßnahmen können weitere notwendige Steuerbefehle erstellt werden. So kann z.B. bei sehr ungleichförmigem Abwasseranfall der Betrieb eines Pufferbeckens oder auch Speicher- oder Ausgleichsbeckens erforderlich sein. Der Betrieb dieses Pufferbeckens, insbesondere die Entleerung, konnte bisher nicht optimal gelöst werden. Mit dem hier zugrunde liegenden Verfahren kann die Füllhöhe des Pufferbeckens exakt ermittelt werden. Daraus wiederum kann eine optimierte Entleerung z.B. in die Vorklärung oder in den SBR-Reaktor abgeleitet werden.

Die notwendigen Druckmessdaten können sowohl im "normalen" Betrieb der einzelnen Luftverbraucher z.B. Mammutpumpe / Belüfter, als auch durch separate Druckbeaufschlagung außerhalb des "normaöen" Betriebes der einzelnen Luftverbraucher gewonnen werden. In diesem Fall kann z.B. die Beschickungspumpe der Vorklärung außerhalb der eigentlichen Beschickungszeit mit Druckluft beaufschlagt werden, um so auch "zwischendurch" den Wasserstand der Vorklärung durch Druckmessung zu ermitteln. Damit kann z.B. mittels der Steuereinheit geprüft werden, wieviel Abwasser bereits in der Vorklärung vorhanden ist, um bei sehr hohem Wasserstand in der Vorklärung die zu diesem Zeitpunkt laufende Belüftungsphase abzukürzen, wenn sich beispielsweise zur gleichen Zeit im SBR-Reaktor wenig Abwasser zur Reinigung befindet.

Weiterhin können auch eine oder mehrere separate Lufteintragungsleitungen in einen oder mehrere Behälter oder Behältersegmente eingebaut werden, um über den gemessenen Druck die Wasserhöhe zu ermitteln und damit die gleichen Informationen zur optimalen Steuerung der Anlagen zu erhalten.

Ein weiterer Vorteil dieser Erfindung ist die weitergehende Absicherung des Verfahrensablaufes in einem dezentralen Abwasserreinigungsprozesses. Die Druckmessung kann in Neuanlagen eingebaut oder in bestehenden Anlagen nachgerüstet werden. Eine Verwendung ist nicht nur bei SBR-Anlagen sondem in sonstigen Abwasserbehandlungsanlagen, die einen Eintrag von verdichteter Luft aufweisen, vorgesehen.

Weitere Einzelheiten und Merkmale der Erfindung ergeben sich aus der zeichnerischen Darstellung eines schematischen Ausführungsbeispieles für eine SBR-Anlage.

Es zeigen:
- Figur 1: eine Kleinkläranlage mit einem Drucksensor zur Steuerung der SBR-Anlage;
- Figur 2: die Kleinkläranlage nach Figur 1 mit mehreren Drucksensoren in mehreren Luftleitungen.

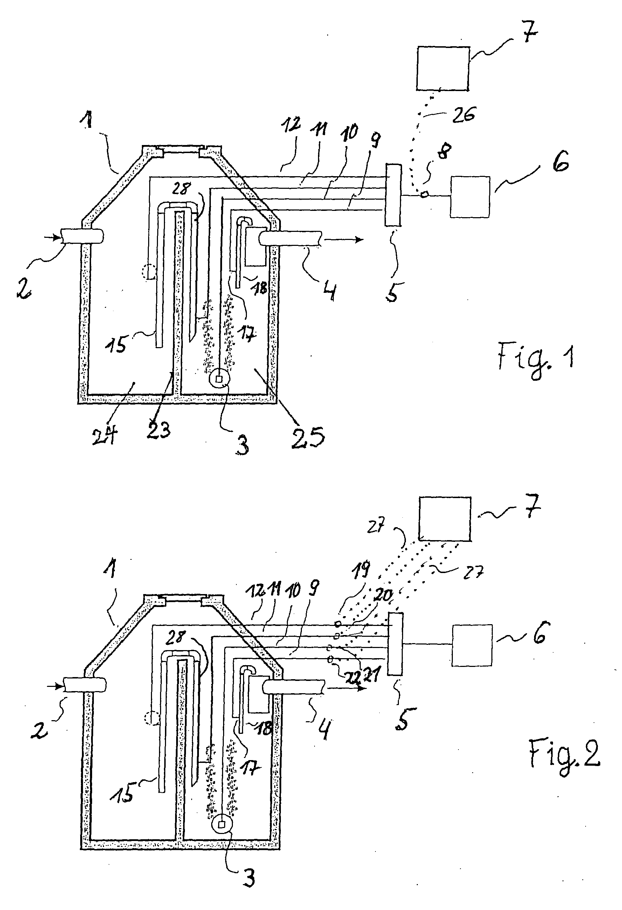

Die SBR-Anlage in der beispielhaften Ausgestaltung nach Figur 1 umfasst ein vorzugsweise aus Beton oder Kunststoff z. B. PE hergestelltes Reaktorgehäuse 1 mit zwei durch eine Gehäusewand 23 getrennte Kammern 24 und 25. In der linken Kammer 24 befindet sich in Überlaufhöhe ein Wasserzulauf 2 und in der rechten Kammer 25, dem Wasserzulauf gegenüber, ein Wasserablauf 4. Die Ziffer 3 bezeichnet einen Belüfter 3 in der rechten Kammer 25.

Die SBR-Anlage besitzt ein Gebläse bzw. einen Verdichter 6, eine Steuereinheit 7 und einem Luftverteiler 5, von dem Luftzuleitungen 9 bis 12 zur Mammutpumpe Klarwasserabzug 18, zum Belüfter 3, zur Mammutpumpe Überschussschlammabzug 28 und zur Mammutpumpe Vorklärung 15 geführt sind.

In der Leitung zwischen Gebläse / Verdichter 6 und Luftverteiler 5 bzw. in einer Bypassleitung zur Steuereinheit 7 ist ein Drucksensor 8 angeordnet, der mit der Steuereinheit 7 für den Prozessablauf der Abwasserreinigung im SBR-Reaktor zusammenwirkt.

Die SBR-Anlage gemäß Figur 2 besitzt in den Luftzuleitungen 9 bis 12 anstelle des gemeinsamen Drucksensors 8 (Figur 1) individuell einstellbare bzw. steuerbare Drucksensoren 19 bis 22, die ihrerseits jeweils über eine Signalleitung 27 mit der Steuereinheit 7 messtechnisch und regeltechnisch zusammenwirken. Dabei ist mit der Ziffer 19 der Drucksensor für die Druckleitung Mammutpumpe Vorklärung bezeichnet. Mit Ziffer 20 ist der Drucksensor Luftleitung Mammutpumpe Überschußschlammabzug bezeichnet. Ziffer 21 kennzeichnet den Drucksensor der Luftzuleitung Belüfter 3 und Ziffer 22 betrifft den Drucksensor Eintragungspunkt Mammutpumpe.

Mit der erfindungsgemäßen Möglichkeit, mittels eines Drucksensors exakte Höhenstandsmessungen im SBR-Reaktor durchzuführen, können die SBR- bzw. Aufstauanlagen nunmehr in einer völlig neuen Weise gesteuert und überwacht werden. Beispielhaft können nun erstmals:
- Über exakte Höhenstandsmessung und die in der Steuerung hinterlegte Bekkengeometrie für die Oberfläche die der Anlage zugeführte Wassermenge erfasst werden.
- Die bisher ausschließlich mit einer festen Zykluszeit arbeitenden Anlagen können nunmehr durch die erfassten Wassermengen dynamisch adaptiert gesteuert werden.
- Die Pumpenfunktionen können durch den Vergleich der geförderten Wassermengen auf ihre Durchgängigkeit und Funktion überwacht werden.
- Im Hinblick auf notwendige Stickstoffelimination können durch die exakte Kenntnis der Wassermengen die Steuerzeiten für Nitrifikation / Denitrifikation dynamisch gestaltet werden.
- Auch die Phosphatelimination kann bezüglich der Fällmittelzugabe realisiert werden. Dagegen war bei bisherigen schwimmergesteuerten Analgen eine exakte Dosierung nicht möglich.
- Bisher nicht vorliegende Erkenntnisse der aus der Abwasserreinigungsanlage abfließenden Wassermengen stehen nunmehr für Betreiber, Behörden und andere Interessenten zur Verfügung.

Figur 1 stellt nur eine von vielen Möglichkeiten der Anlagenausgestaltung dar. Die Anlagen können aus einem oder mehreren Behältern jedweder Art und Material bestehen und in ihrer Ausgestaltung der Komponenten, beispielsweise Verdichter, Luftverteiler, Luftzuleitung, Mammutpumpe oder dergleichen, hinsichtlich Bauart, Anzahl, Anordnung variieren. Das zuvor beschriebene Verfahren und seine Vorteile kann auch in solchen Anlagen angewendet werden.

Insoweit stell die vorliegende Erfindung eine optimale Lösung der Eingangs gestellten Aufgabe dar.

### Bezugszeichenliste

- 1.: SBR-Anlage
- 2.: Wasserzulauf
- 3.: Belüfter
- 4.: Wasserablauf
- 5.: Luftverteiler
- 6.: Verdichter / Gebläse
- 7.: Steuereinheit
- 8.: Drucksensor
- 9.: Luftzuleitung Mammutpumpe Vorklärung
- 10.: Luftzuleitung Mammutpumpe Überschußschlammabzug
- 11.: Luftzuleitung Rohrbelüfter
- 12.: Luftzuleitung Mammutpumpe Klarwasserabzug
- 15.: Mammutpumpe Vorklärung
- 17.: Eintragspunkt Mammutpumpe Klarwasserabzug
- 18.: Mammutpumpe Klarwasserabzug
- 19.: Drucksensor Luftzuleitung Mammutpumpe Vorklärung
- 20.: Drucksensor Luftzuleitung Mammutpumpe Überschussschlammabzug
- 21.: Drucksensor Luftzuleitung Rohrbelüfter
- 22.: Drucksensor Eintragspunkt Mammutpumpe Klarwasserabzug
- 23.: Gehäusewand
- 24.: Kammer
- 25.: Kammer
- 26.: Signalleitung
- 27.: Signalleitung
- 28.: Mammutpumpe Überschussschlammabzug

## Patentansprüche

1. Verfahren zur Überwachung und Steuerung von Reinigungsprozessen in Abwasserbehandlungsanlagen, insbesondere in Kleinkläranlagen bzw. kleinen Kläranlagen, die nach dem SBR-Verfahren bzw. Aufstauverfahren betreibbar sind, mittels Höhenstandsmessungen in einander folgenden Behandlungsstufen beispielsweise für
- mechanische Vorklärung / Puffer bzw. Speicher, sowie
- biologische Reinigung einschließlich Nachklärung
**dadurch gekennzeichnet,**
**dass** in wenigstens einer Behandlungsstufe eine Höhenstandsmessung des Abwassers unter Verwendung wenigstens eines Drucksensors (19-22) mittels Druckluft durchgeführt wird und die erhaltenen Messwerte einer zentralen Steuereinheit (7) aufgeschaltet werden, die diese Messwerte auswertet und ggf. mit einem in der Steuereinheit (7) hinterlegten Steuerprogramm vergleicht und ggf. Steuerbefehle an eine Behandlungsstufe auslöst bzw. Informationen über eine Behandlungsstufe abgibt.

2. Verfahren nach einem der Ansprüche 1,
**dadurch gekennzeichnet,**
**dass** die Druckmessung mechanisch, elektronisch oder einer Kombination derselben oder dergleichen erfolgt.

3. Verfahren nach einem der Ansprüche 1 oder 2,
**dadurch gekennzeichnet,**
**dass** es in einem vorhandenen oder neu zu installierenden Abwasserreinigungssystem eingesetzt oder nachgerüstet wird.

4. Verfahren nach einem oder mehreren der Ansprüche 1 bis 3,
**dadurch gekennzeichnet,**
**dass** es in jeweils unterschiedlichen Behandlungsstufen realisiert wird.

5. Verfahren nach einem oder mehreren der Ansprüche 1 bis 4,
**dadurch gekennzeichnet**,
die Drucksensoren (19-22) zur Steuerung / Regelung einer Phosphatfällung benutzt werden.

6. Verfahren nach einem oder mehreren der Ansprüche 1 bis 5,
**dadurch gekennzeichnet,**
**dass** die Drucksensoren (19-22) zur Steuerung / Regelung der Nitrifikation /Denitrifikation im Abwasser benutzt werden.

7. Verfahren nach einem oder mehreren der Ansprüche 1 bis 6,
**gekennzeichnet durch,**
mindestens eine Temperaturmessung zur Optimierung der Drucksteuerung mittels der Drucksensoren (19-22).

8. Anwendung des Verfahrens nach einem oder mehreren der Ansprüche 1 bis 7, auf solche der Abwasserbehandlungsanlage zugeordnete Speicher und/oder Pufferbehälter.

9. Vorrichtung zur Überwachung und Steuerung von Reinigungsprozessen in Abwasserbehandlungsanlagen, insbesondere in Kleinkläranlagen bzw. kleinen Kläranlagen, die nach dem SBR-Verfahren bzw. Aufstauverfahren betreibbar sind, mittels Höhenstandsmessungen in einander folgenden Behandlungsstufen,
**dadurch gekennzeichnet,**
**dass** in mindestens eine von einem Gebläse / Verdichter (6) druckseitig abgehenden Luftleitungen bzw. abgehende Luftleitungen (9-12) einzelne oder mehrere Drucksensoren (8, 19-22) eingebaut und diese mit einer Steuerungseinheit (7) für den Prozessablauf verbunden sind.

10. Vorrichtung nach Anspruch 9,
**dadurch gekennzeichnet,**
**dass** mindestens ein Temperatursensor angeordnet ist, der mit der Steuerungseinheit (7) in Verbindung steht.

11. Vorrichtung nach Anspruch 9 oder 10,
**dadurch gekennzeichnet,**
**dass** der Abwasserbehandlungsanlage zugeordnete Speicher und/oder Pufferbehälter mit Druck- und/oder Temperatursensoren ausgerüstet sind, die mit der Steuerungseinheit (7) in Verbindung stehen.

12. Vorrichtung nach Anspruch 9, 10 oder 11,
**dadurch gekennzeichnet,**
**dass** die Drucksensoren (19-22) durch separate Signalleitungen mit der Steuereinheit (7) verbunden sind.
